# EUROPÄISCHE PATENTSCHRIFT

(11) **EP 0 617 810 B1**
(45) Veröffentlichungstag und Bekanntmachung des Hinweises auf die Patenterteilung: **30.08.1995**
(21) Anmeldenummer: 93902114.3
(22) Anmeldetag: 17.12.1992
(51) Int. Cl.: G05D 25/02, E05B 51/00

(54) **EINRICHTUNG ZUM ÜBERWACHEN EINES VERSCHLUSSES**
DEVICE FOR MONITORING A LOCK
DISPOSITIF POUR LA SURVEILLANCE D'UNE FERMETURE

(30) Priorität: 21.12.1991 DE 4142530; 16.12.1992 DE 4242550
(43) Veröffentlichungstag der Anmeldung: 05.10.1994
(73) Patentinhaber: HAL-Sicherheitstechnik GmbH, D-73733 Esslingen (DE)
(72) Erfinder: HENKE, Dietfried, D-7000 Stuttgart 40 (DE)
(74) Vertreter: Geyer, Ulrich F., Dr. Dipl.-Phys.
(86) Internationale Anmeldenummer: EP9202937
(87) Internationale Veröffentlichungsnummer: WO9313468

(56) Entgegenhaltungen:
- DE-A- 2 338 585
- DE-A- 2 716 211
- DE-A- 2 903 055
- DE-C- 4 009 323
- US-A- 3 898 454

## Beschreibung

Die Erfindung betrifft eine Einrichtung zum Überwachen eines Verschlußriegels, -im nachfolgenden auch Verschlußelement genannt-, auf seinen geschlossenen oder offenen Zustand, mit einer Lichtübertragungsstrecke, die an ihrem einen Ende einen Lichtsender und an ihrem anderen Ende einen Lichtempfänger aufweist, und mit einer im Verschlußriegel geführten Lichtübertragungsstrecke, die bei geschlossenem Verschlußriegel nicht unterbrochen ist.

Vorrichtungen sind in vielfältiger Weise bekannt, bei denen das Verschlußelement als Lichtschranke dient, die im geschlossenen Zustand einen Lichtweg freigibt und im offenen Zustand den Lichtweg freigibt, so daß in Abhängigkeit davon ein Überwachungssignal erzeugt wird. Bei derartigen Anordnungen ist eine einwandfreie Funktion nicht gewährleistet, da durch Verschmutzung oder Abdeckung ein geschlossener Zustand des Verschlusses vorgetäuscht werden kann. Darüber hinaus kann sich das Verschlußelement und/oder die Anordnung des Lichtsenders und/oder -empfängers in seiner Lage verändern, wodurch wiederum keine zuverlässige Arbeitsweise der bekannten Anordnung gewährleistet ist. Einen weiterer Nachteil besteht darin, daß durch Fremdlicht- und Streulichteinflüsse ein Schließzustand vorgetäuscht wird. Darüber hinaus ist eine Sabotagesicherheit nicht gewährleistet.

Dieselben Nachteile weisen auch Verfahren und Anordnungen auf, bei denen ein Lichtstrahl an einem Verschlußelement reflektiert wird, und die Reflexionen als geschlossener Zustand eines Verschlußelementes ausgewertet werden. Ein Beispiel für eine derartige Anordnung ist beispielsweise der elektronische Regelschaltkontakt FRSK der Firma Baranski Sicherheitstechnik, Gelsenkirchen-Buer.

Weitere Verfahren und Einrichtungen zur Überwachung eines Verschlusses auf seinen geschlossenen oder offenen Zustand sind beispielsweise der Magnetschalter Typ 100 10 34 A der Firma Elektro-Spezial-Bedarf Norbert Link GmbH, oder Reed Kontakt-Einrichtungen, bei denen Magnetkontakte zur Anwendung kommen.

Aus der DE-A-29 03 055 ist eine optische Detektorvorrichtung der eingangs genannten Art bekannt, bei der das Verschlußelement eine U-förmige Lichtübertragungsstrecke aufweist. Im geschlossenen Zustand des Verschlußelements leitet die Lichtübertragungsstrecke einen Lichtstrahl von einem Lichtsender zu einem Lichtempfänger. Im geöffneten Zustand, wenn die Lichtübertragungsstrecke den Sender und den Empfänger optisch nicht verbindet, trifft kein Licht auf den Empfänger auf, wodurch der nicht geschlossene Zustand des Verschlusses bzw. des Verschlußelementes feststellbar ist. Der Nachteil dieser Anordnung besteht darin, daß bei der Fertigung und insbesondere Montage nur sehr kleine Toleranzen zugelassen werden können, weil bei einer nicht genauen Ausrichtung und Zuordnung des Senders und des Empfängers auf die Eintritts- bzw. Austrittsflächen der Lichtübertragungsstrecke eine zuverlässige Funktion der Anordnung nicht gewährleistet ist. Diese Anordnung ist daher nur unter hohem, sehr präzisen Herstellungs- und Montageaufwand einsetzbar und nur für hochwertige und präzise Verschlüsse, wie Tresortüren usw., verwendbar.

Aus der US-A-3 889 454 ist eine optische Meßanordnung bekannt, in der die Stellung eines Luftdrucksensors mittels zweier nebeneinander angeordneter Lichtsender und eines Lichtempfängers über eine Lichtübertragungsstrecke optisch ermittelt wird. In der Lichtübertragungsstrecke vom Lichtsender zum Lichtempfänger wird eine Platte vom Luftdrucksensor auf- und abbewegt, die zwei nebeneinander in verschiedender Höhe angeordete Öffnungen aufweist, durch die entsprechend der Plattenstellung Licht hindurch auf den Lichtempfänger fällt. Die Platte mit den Öffnungen stellt hierbei jedoch kein Verschlußelement im Sinne eines Verschlußriegels, sondern eine Verschlußblende dar.

Der vorliegenden Erfindung liegt daher die Aufgabe zugrunde, eine Einrichtung der eingangs genannten Art anzugeben bzw. zu schaffen, das bzw. die eine einwandfreie, zuverlässige Funktion gewährleistet, einen geringen Platzbedarf erfordert, montagefreundlich ist und auf einfache Weise hergestellt und angebracht werden kann.

Ausgehend von der eingangs genannten Einrichtung wird die gestellte Aufgabe dadurch gelöst, daß die Lichtübertragungsstrecke schräg im Verschlußriegel angeordnet ist und aus wenigstens zwei Lichtübertragungsbereichen besteht, die bezüglich der Bewegungsrichtung des Verschlußriegels nebeneinander angeordnet und optisch voneinander getrennt sind. Durch diese erfindungsgemäße Maßnahme ist ein zuverlässiger und sicherer Lichtdurchtritt auch dann gewährleistet, wenn der Verschlußriegel hinsichtlich seiner Bewegung und seiner Lage große Toleranzen aufweist. Das heißt, die sichere Überwachung des Verschlußriegels auf seinen geschlossenen oder offenen Zustand kann auf Grund der Tatsache, daß kleine Toleranzen für die Lage und Bewegung des Verschlußriegeles nicht erforderlich sind, auf einfache Weise und kostengünstig durchgeführt werden.

Besonders vorteilhaft ist es, wenn ein Lichtsender und ein Lichtempfänger in Bezug zueinander derart angeordnet werden, daß das vom Lichtsender erzeugte Licht bei geöffnetem Verschlußriegel nicht auf den Lichtempfänger fällt. Dadurch wird ausgeschlossen, daß bei offenem Zustand Licht des Lichtsenders auf den Lichtempfänger fällt und der Unterschied zwischen offenem und geschlossenem Zustand sicher festgestellt wird.

Es ist auch möglich, die Lichtübertragungsstrecke S-förmig durch den Verschlußriegel zu führen. Die Erfindung ermöglicht eine große Variationsbreite der Anordnung des Lichtempfängers und des Lichtsenders sowie der Elektronik in Abhängigkeit von den vorhandenen Platzmöglichkeiten. Durch die versetzte Anordnung der Sende- und Empfangselemente ist weiterhin eine hohe Fremdlicht- und Streulichtsicherheit gewährleistet.

Die Lichtübertragungsstrecke kann vorzugsweise durch einen Kanal im Verschlußelement, vorzugsweise aber auch mittels eines Lichtleiters im Verschlußelement geführt werden. Mit einem Lichtleiter ist die Art und Form der Führung der Lichtübertragungsstrecke im Verschlußelement weitgehend frei wählbar und auf einfache Weise an die gegebenen räumlichen Möglichkeiten anpaßbar.

Der Kanal bzw. der Lichtleiter für die Lichtübertragungsstrecke besteht dabei aus wenigstens zwei voneinander optisch getrennten Kanal- bzw. Lichtleiterbereichen. Dadurch ist es möglich, hinsichtlich der Lage und der Toleranzen des Verschlußelements und damit der Lichtübertragungsstrecke bezüglich des Lichtsenders und/oder Empfängers mit großen Toleranzen fertig zu werden, so daß der Herstellungs- und Montageaufwand gegenüber über herkömmlichen Einrichtungen wesentlich verringert wird.

Gemäß einer besonders vorteilhaften Ausführungsform der Erfindung sind die optisch voneinander getrennten Lichtleiterbereiche im selben Lichtleiter angeordnet, wobei die einzelnen Lichtleiterbereiche durch lichtreflektierende Grenzschichten voneinander optisch getrennt sind. Der Lichtleiter kann dabei aus demselben Material bestehen. Im Falle, daß die Lichtübertragungsstrecke schräg durch das Verlustelement geführt ist, ergeben sich an den Grenzschichten Lichtreflektionen, so daß das Licht bei geschlossenem Verschluß einwandfrei vom Lichtsender zum Lichtempfänger gelangt.

Die Grenzschichten zwischen den einzelnen Lichtleiterbereichen können vorzugsweise durch Metallbeschichtung und/oder -bedampfung gebildet sein, was herstellungsmäßig einfach und kostengünstig ist.

Gemäß einer weiteren sehr vorteilhaften Ausführungsform der Erfindung weisen die Lichtübertragungsbereiche quer zur Bewegungsrichtung des Verschlußelements Abmessungen auf, die wenigstens so groß wie die größten Bewegungstoleranzen des Verschlußelementes zur eigentlichen Bewegungsrichtung des Verschlußelements sind. Durch diese Maßnahme ist eine einwandfreie Funktion der Überwachungseinrichtung auch dann gewährleistet, wenn Toleranzen oder Verschiebungen des Verschlußelementes quer zur eigentlichen Bewegungsrichtung des Verschlußelements auftreten.

Das Verschlußelement ist vorzugsweise der auf den geschlossenen oder offenen Zustand zur überwachende Gegenstand, beispielsweise eine Tür, eine Klappe, ein Fenster, usw., selbst. Das heißt, die Lichtübertragungsstrecke verläuft durch einen Teil dieses Gegenstands, beispielslweise durch den Tür- oder Glasrahmen eines Fensters, so daß die darin befindliche Lichtübertragungsstrecke, beispielsweise ein Lichtleiter, das Licht im geschlossenen Zustand der Tür oder des Fensters von einem außen angebrachten Lichtsender zu einem an einer anderen Stelle angebrachten Lichtempfänger leitet, und dadurch der geschlossene Zustand der Tür oder des Fensters angezeigt wird.

Gemäß einer besonders vorteilhaften Ausgestaltung der Erfindung ist das Verschlußelement ein Verschlußriegel oder eine Verschlußzunge. Im geschlossenen Zustand des Verschlußriegels wird das von einem außerhalb des Verschlußriegels angebrachten Lichtsender abgestrahlte Licht durch die im Verschlußelement geführte Lichtübertragungsstrecke zu einem Lichtempfänger geleitet, wodurch wiederum der geschlossene Zustand des Verschlußriegels angezeigt werden kann. Wie bereits ausgeführt, ist für den Verschlußriegel ein relativ großer Toleranzbereich seiner Bewegung möglich, ohne daß die sichere und zuverlässige Funktion der Überwachungseinrichtung in Frage gestellt wäre.

Vorteilhafterweise wird ein Alarmsignal bei unterbrochener Lichtübertragungsstrecke erzeugt, welches eine Alarmeinrichtung in Funktion setzt.

Gemäß einer weiteren vorteilhaften Ausführungsform der Erfindung werden Lichtimpulse von einem Lichtimpulssender erzeugt, die einem Lichtimpulsempfänger über die Lichtübertragungsstrecke zugeleitet werden, wobei das Ausgangssignal des Lichtimpulsempfängers die Aussendung des Lichtimpulses unterbindet. Dadurch ist ein Überrechnungsverfahren mit sehr geringer Stromaufnahme möglich. Um Wiederholungen zu dieser Ausführungsform zu vermeiden, wird auf die dasselbe Prioritätsdatum aufweisende DE-A- 41 42 529 derselben Anmelderin hingewiesen. Diese Druckschrift wird insofern zum Inhalt der vorliegenden Anmeldung gemacht.

Vorteilhaft ist es dabei, wenn der Lichtimpulssender bezüglich des Auftretens des Ausgangssignals des Lichtimpulsempfängers zeitlich verzögert aktiviert wird. Der Verzögerungszeitraum sollte dabei gegenüber der Lichtimpulsdauer groß sein. Vorzugsweise setzt das Ausgangssignal des Lichtimpulsempfängers einen von einem Taktsignalgenerator gesteuerten Zähler zurück, der das Aktivieren und Deaktivieren des Lichtimpulssenders steuert. Der Zähler wird dabei bei Anlegen einer Versorgungsspannung rückgesetzt, damit das Verfahren bei Infunktionsetzen aktiviert wird. Wie erwähnt, sind diese Merkmale im einzelnen in der genannten Offenlegungsschrift im einzelnen beschrieben, und auf die Bezug genommen wird.

Zur Verbesserung der Stör- und Sabotagesicherheit ist der Lichtsender also ein Lichtimpulssender und der Lichtempfänger ein Lichtimpulsempfänger. Durch die impulsmäßige Codierung des übertragenen Lichtsignals wird die Zuverlässigkeit und Störsicherheit weiter erhöht.

Bei der erfindungsgemäßen Einrichtung sind insbesondere die Merkmale der in der genannten Druckschrift beschriebenen Sicherungseinrichtung mit Vorteil anwendbar.

Weitere Merkmale und Vorteille der Erfindung werden nachfolgend anhand von Ausführungsbeispielen unter Bezugnahme auf die Zeichnungen beschrieben. Es zeigen:
- Fig. 1: ein Ausführungsbeispiel der Erfindung am Beispiel eines Verschlußriegels in schematischer Darstellung;
- Fig. 2: eine perspektivische Darstellung von Fig. 1 mit weiteren Einzelteilen;
- Fig. 3: schematische Darstellungen von verschiedenen Verschlußriegelstellungen; und
- Fig.4a 4b: weitere Ausführungsformen der Erfindung im Zusammenhang mit einer Tür- oder Fensterklappe.

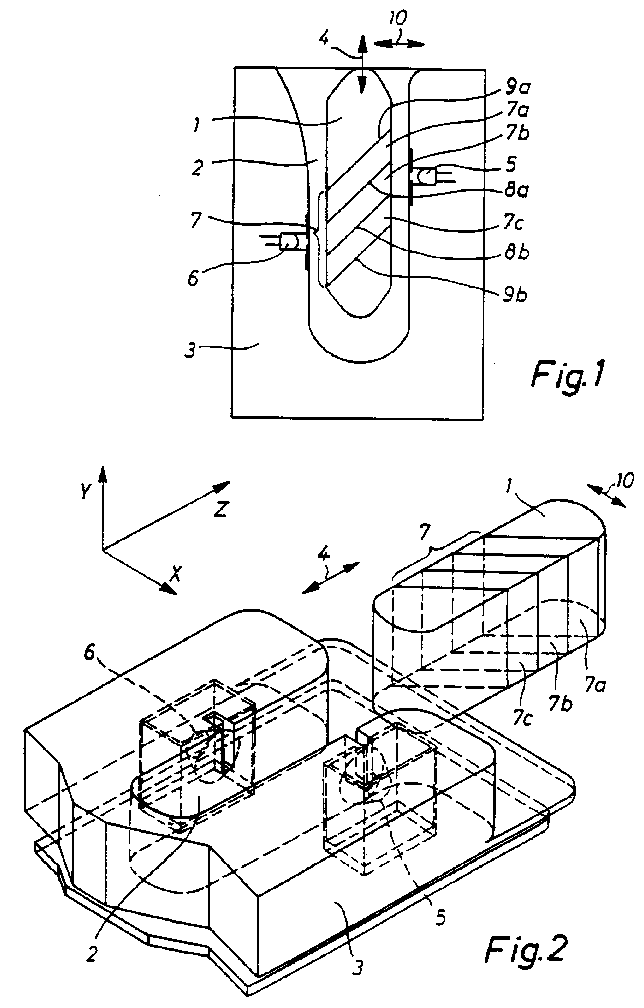

Bei der in Fig. 1 und 2 dargestellten Ausführungsform der Erfindung ist ein Verschlußriegel 1 in einem Verschlußriegel-Aufnahmeschlitz 2 eines Schlosses 3 schematisch dargestellt. Die Bewegung des Verschlußriegels 1 in das Schloß 3 hinein und heraus ist durch Pfeile 4 angedeutet und wird als Z-Richtung bezeichnet. Ein Sender 5 ist an einer langen Innenfläche des Verschlußriegel-Schlitzes 2 des Schlosses 3 in der Nähe der Schlitzöffnung angeordnet. Auf der gegenüberliegenden langen Innenfläche des Verschlußriegels 2 ist im hinteren Teil ein Empfänger 6 vorgesehen. Der Sender 5 und der Empfänger 6, die gegebenenfalls von einer Blende umgeben sein können, sind also im Verschlußriegel-Schlitz 2 nicht gegenüber, sondern zueinander versetzt angeordnet.

Im Verschlußriegel 1 ist eine Lichtübertragungsstrecke 7 beispielsweise in Form eines Lichtleiters vorgesehen, die drei Lichtübertragungsbereiche 7a, 7b, 7c aufweist. Die optische Trennung der drei Lichtübertragungsbereiche 7a, 7b, 7c ist bei dem dargestellten Ausführungsbeispiel durch metallisierte Grenzschichten 8a und 8b gewährleistet, wobei die äußeren Flächen 9a bzw. 9b der außenliegenden Lichtübertragungsbereiche 7a, 7c ebenfalls eine lichtreflektierende Schicht aufweisen.

In Fig. 1 befindet sich der Verschlußriegel 1 im Verschlußriegel-Aufnahmeschlitz 2 bezüglich der Z- und der durch einen weiteren Pfeil angedeuteten X-Richtung in einer Stellung, in der das vom Sender 5 abgegebene Licht durch den Lichtübertragungsbereich 7b des Lichtleiters 7 zum Empfänger 6 gelangt. In dem dargestellten, geschlossenen Zustand, wenn also der Verschlußriegel 1 im Verschluß-Aufnahmeschlitz 2 eingeschoben ist, ergibt sich eine Lichtverbindung zwischen dem Lichtsender 5 und dem Lichtempfänger 6, und die nicht dargestellte Schaltungsanordnung für die Auswertung stellt fest, daß der Verschluß sicher geschlossen ist.

Vorteilhafterweise bestehen die Lichtübertragungsbereiche 7a, 7b, 7c des Lichtleiters 7 jeweils aus demselben Material, während die übrigen Bereiche der Verschlußriegels 1 beispielsweise aus einem anderen Material, etwa Metall, bestehen können. Die übrigen Bereiche des Verschlußriegels 1 können jedoch auch aus dem Material der Lichübertragungsstrecke 7 bestehen, wobei dann jedoch die Außenflächen dieser Bereiche eine lichtreflektierende und lichtdurchlässige Oberfläche, also eine matte Oberfläche oder eine metallbedampfte Oberfläche aufweisen sollten.

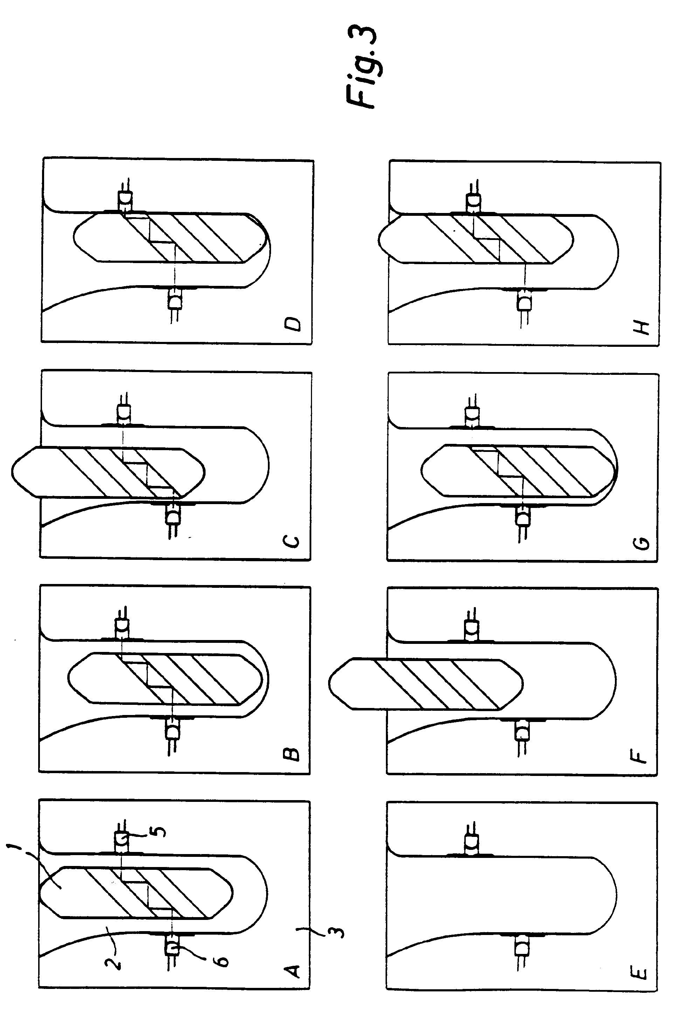

Fig. 3 zeigt die schematische Darstellung verschiedener Verschlußriegelstellungen zur weiteren Erläuterung der Erfindung.

Fig. 3A entspricht der in Fig. 1 dargestellten Stellung des Verschlußriegels 1, bei der Licht vom Sender 5 in den Lichtübertragungsbereich 7b gelangt, an den metallisierten Grenzschichten 8a, 8b reflektiert wird und auf den auf der anderen Seite des Verschlußelements 1 angeordneten Empfänger 6 fällt.

Gemäß Fig. 3B taucht der Verschlußriegel 1 in der Z-Richtung stärker in den Verschlußriegel-Aufnahmeschlitz 2 ein, so daß nunmehr das vom Sender 5 abgegebene Licht in den Lichtübertragungsbereich 7a fällt und an den metallisierten Schichten 8a, 9a zum Empfänger 6 geführt wird.

Gemäß Fig. 3C befindet sich der Verschlußriegel 1 in einer etwas weiter aus dem Verschlußriegel-Aufnahmeschlitz 2 herausgezogenen Stellung. Dadurch gelangt das vom Sender 5 abgegebene Licht in den Lichtübertragungsbereich 7c und wird an den metallisierten Grenzschichten 8b, 9b reflektiert und gelangt schließlich wiederum auf den Empfänger 6.

Die Stellung des Verschlußriegels 1 in Fig. 3D unterscheidet sich von der in Fig. 3B dargestellten Lage lediglich dadurch, daß der Verschlußriegel 1 bezüglich der X-Richtung verschoben ist. Das vom Sender 5 abgegebene Licht gelangt bei der in Fig. 3D dargestellten Verschlußriegelstellung auf dieselbe Weise wie bei der Verschlußriegelstellung gemäß Fig. 3B zum Empfänger 6.

In Fig. 3E ist der Zustand dargestellt, bei dem sich der Verschlußriegel 1 nicht im Verschlußriegel-Aufnahmeschlitz 2 befindet. Das Licht des Senders 5 trifft auf die gegenüberliegende Fläche des Verschlußriegels-Aufnahmeschlitzes 2 und nicht auf den Empfänger 6 auf. Die Auswerteschaltung erhält daher auch kein Ausgangssignal des Lichtempfängers 6 und stellt dadurch den offenen Zustand des Verschlußelements 1 fest.

Auch bei der in Fig. 3F dargestellten Verschlußriegelstellung gelangt das vom Sender 5 abgegebene Licht nicht zum Empfänger 6, weil es nicht in eines der Lichtübertragungsbereiche 7a, 7b, 7c, sondern auf die Außenfläche des Verschlußriegels 1 fällt.

Die Fig. 3G und 3H zeigen weitere Stellungen des Verschlußriegels 1, in denen das vom Sender 5 abgegebene Licht wiederum über eines der Lichtübertragungsbereiche, nämlich über den Lichtübertragungsbereich 7a (vgl. Fig. 3G) bzw. 7b (vgl. Fig. 3H) zum Empfänger 6 gelangt.

Die Aussagen der Fig. 3A bis 3H zusammenfassend ist festzustellen, daß dann, wenn der Verschlußriegel 1 von einem gewissen Maße an in den Verschlußriegel-Aufnahmeschlitz 2 eingeschoben ist, das vom Sender 5 abgegebene Licht zum Empfänger 6 gelangt, und zwar unabhängig davon, in welcher Stellung sich der Verschlußriegel 1 in Verschlußriegel-Aufnahmeschlitz 2 befindet, d. h. ob er vollständig bis zur Schlitzsohle eingeschoben ist, und/oder sich bezüglich der Schlitzflächen in der Mitte befindet oder außermittig liegt.

Aus Fig. 2 ist die seitliche Fläche des Verschlußriegels 1 und die Ausbildung der Lichtübertragungsstrecke 7 an den seitlichen Flächen ersichtlich. Die Lichtübertragungsstrecke 7 bzw. die Lichtübertragungsbereiche 7a, 7b, 7c sind dabei rechteckig ausgebildet und verlaufen über die gesamte Breite in Y-Richtung (vgl. den Pfeil in Fig. 2) der Seitenfläche des Verschlußriegels 1. Durch diese Ausführungsform ist auch dann eine sichere Führung des vom Sender 5 abgestrahlten Lichtes zum Lichtempfänger 6 sichergestellt, wenn sich der Verschlußriegel 1 in Y-Richtung an unterschiedlichen Stellen innerhalb eines großen Toleranzbereichs befindet.

Mit der erfindungsgemäßen Einrichtung ist also auch bei großen Toleranzen in der Führung und Bewegung des Verschlußriegels 1 im Verschlußriegel-Aufnahmeschlitz 2 immer die einwandfreie und zuverlässige Funktion der Überwachungseinrichtung gewährleistet.

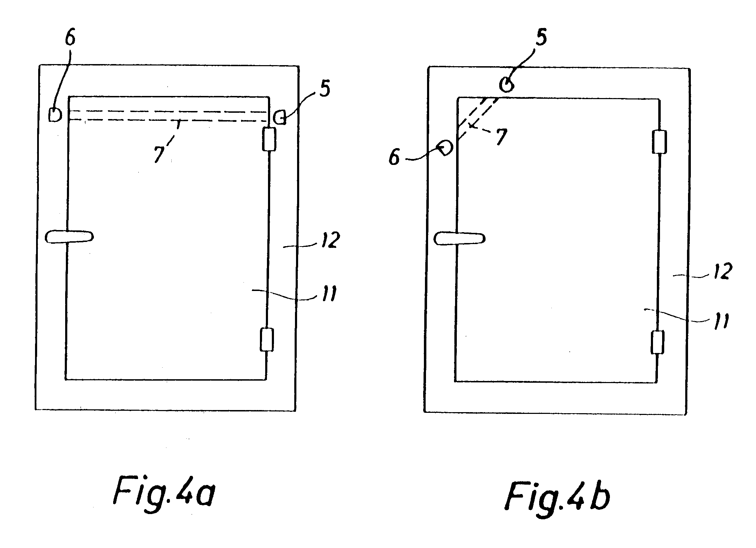

In den Fig. 4a und 4b ist jeweils eine Fensterklappe 10 in einem Fensterrahmen 11 dargestellt. In dem in Fig. 4a dargestellten Ausführungsbeispiel verläuft die Lichtübertragungsstrecke 7, beispielsweise ein Lichtleiter, innerhalb der Fensterklappe 11 zwischen dem Lichtsender 5 und dem Lichtempfänger 6 nur, wenn die Fensterklappe geschlossen ist, so daß bei geschlossener Fensterklappe Licht auf den Lichtempfänger 6 fällt, dieser ein entsprechendes Signal abgibt und dadurch der geschlossene Zustand der Fensterklappe von einer Auswerteschaltung festgestellt werden kann. Die in Fig. 4b dargestellte Ausführungsform der erfindungsgemäßen Einrichtung unterscheidet sich von der in Fig. 4a dargestellten Anordnung lediglich dadurch, daß die Lichtübertragungsstrecke 7 in der Fensterklappe 11 über eine Ecke derselben verläuft.

## Patentansprüche

1. Einrichtung zum Überwachen eines Verschlußriegels (1) auf seinen geschlossenen oder offenen Zustand, mit einer Lichtübertragungsstrecke,die an ihrem einen Ende einen Lichtsender (5) und an ihrem anderen Ende einen Lichtempfänger (6) aufweist, und mit einer im Verschlußriegel (1) geführten Lichtübertragungsstrecke (7), die bei geschlossenem Verschlußriegel (1) nicht unterbrochen ist, dadurch
**gekennzeichnet,** daß die Lichtübertragungsstrecke (7) im Verschlußriegel (1) schräg bezüglich seiner Bewegungsrichtung (4, Z) angeordnet ist und aus wenigstens zwei Lichtübertragungsbereichen (7a, 7b, 7c) besteht, die bezüglich der Bewegungsrichtung (4, Z) des Verschlußriegels (1) nebeneinander angeordnet und optisch voneinander getrennt sind.

2. Einrichtung nach Anspruch 1, dadurch gekennzeichnet, daß der Lichtsender (5) außerhalb des räumlichen Lichtempfangsbereichs des Lichtempfängers (6) angeordnet ist, wenn der Verschlußriegel (1) geöffnet ist.

3. Einrichtung nach Anspruch 1 oder 2, dadurch gekennzeichnet, daß die Lichtübertragungsstrecke (7) im Verschlußriegel (1) S-förmig ist.

4. Einrichtung nach einem der vorhergehenden Ansprüche, dadurch gekennzeichnet, daß die Lichtübertragungsstrecke (7) ein Kanal im Verschlußriegel (1) ist, der aus wenigtens zwei voneinander optisch getrennten Kanalbereichen besteht.

5. Einrichtung nach einem der vorhergehenden Ansprüche, dadurch gekennzeichnet, daß die Lichtübertragungsstrecke (7) aus einem Lichtleiter besteht.

6. Einrichtung nach Anspruch 5, dadurch gekennzeichnet, daß der Lichtleiter aus wenigstens zwei optisch voneinander getrennten Lichtleiterbereichen (7a, 7b, 7c) besteht.

7. Einrichtung nach Anspruch 5 oder 6, dadurch gekennzeichnet, daß die optisch voneinander getrennten Lichtleiterbereiche (7a, 7b, 7c) im selben Lichtleiter angeordnet und durch lichtreflektierende Grenzschichten (8a, 8b) optisch voneinander getrennt sind.

8. Einrichtung nach Anspruch 7, dadurch gekennzeichnet, daß die Grenzschichten (8a, 8b) durch eine Metallbeschichtung oder -bedampfung gebildet sind.

9. Einrichtung nach einem der vorhergehenden Ansprüche, dadurch gekennzeichnet, daß die Lichtübertragungsbereiche (7a, 7b, 7c) quer (Y) zur Bewegungsrichtung (Z) des Verschlußriegels (1) Abmessungen aufweisen, die wenigstens so groß wie die größten Bewegungstoleranzen des Verschlußriegels quer (Y) zur Bewegungsrichtung (Z) des Verschlußriegels (1) sind.

10. Einrichtung nach einem der vorhergehenden Ansprüche, dadurch gekennzeichnet, daß bei unterbrochener Lichtübertragungsstrecke ein Alarmsignal erzeugt wird.

11. Einrichtung nach einem der vorhergehenden Ansprüche, dadurch gekennzeichnet, daß der Lichtsender (5) ein Lichtimpulssender und der Lichtempfänger (6) ein Lichtimpulsempfänger ist.

12. Einrichtung nach Anspruch 11, dadurch gekennzeichnet, daß das Ausgangssignal des Lichtimpulsempfängers die weitere Aussendung des Lichtimpulses unterbindet.

13. Einrichtung nach Anspruch 12, dadurch gekennzeichnet, daß der Lichtimpulssender bezüglich des Auftretens des Ausgangssignals des Lichtimpulsempfängers zeitlich verzögert aktiviert wird.

14. Einrichtung nach Anspruch 13, dadurch gekennzeichnet, daß der Verzögerungszeitraum gegenüber der Lichtimpulsdauer groß ist.

15. Einrichtung nach einem der vorhergehenden Ansprüche, gekennzeichnet durch einen Taktsignalgenerator und einen nachgeschalteten Zähler, der den Lichtimpulssender steuert und vom Ausgangssignal des Lichtimpulsempfängers rücksetzbar ist.

16. Einrichtung nach Anspruch 15, dadurch gekennzeichnet, daß der Zähler ein Taktfrequenzteiler mit wenigstens zwei Ausgängen für unterschiedliche Taktfrequenzen ist.

17. Einrichtung nach Anspruch 15 oder 16, dadurch gekennzeichnet, daß die Wellenlänge des Lichtimpulssignals im Infrarotbereich liegt.

18. Einrichtung nach einem der Ansprüche 15 bis 17, gekennzeichnet durch eine Anlaufschaltung zum Rücksetzen des Zählers bei Anlegen einer Versorgungsspannung.

19. Einrichtung nach einem der Ansprüche 15 bis 18, gekennzeichnet durch eine Alarmgeberschaltung, die ein Alarmsignal erzeugt, wenn am Reset-Eingang des Zählers innerhalb eines vorgegebenen Zeitraums kein Ausgangssignal des Lichtimpulsempfängers auftritt.

20. Einrichtung nach einem der Ansprüche 15 bis 19, dadurch gekennzeichnet, daß die Lichtimpulsdauer klein gegenüber einem vorgegebenen Zeitraum ist, während dem der Zähler kein Alarmsignal abgibt.

21. Einrichtung nach einem der Ansprüche 15 bis 20, dadurch gekennzeichnet, daß der Lichtimpulsempfänger einen Kondensator aufweist, der den Reset-Eingang des Zählers nach Erreichen einer Schwellspannung ein Rücksetzsignal bereitstellt.

## Claims

1. Device for monitoring a lock element (1) to determine, whether it is closed or open, said device comprising a light-transmission path having on one end thereof a light emitter (5) and on the other end thereof a light receiver (6) and further comprising a light-transmission path (7) passing through the lock element (1) that is unobstructed when the lock element (1) is in the closed position, characterized in that the light-transmission path (7) is designed oblique in the lock element (1) with respect to its direction of motion (4, Z) and having at least two light-transmission zones (7a, 7b, 7c) that are disposed adjacent to each other with respect to the direction of motion (4, Z) of the lock elements (1) and optically separated from each other.

2. Device according to claim 1 characterized in that the light emitter (5) is located outside from the spatial light reception area or field of the light receiver (6) if the lock element (1) is open.

3. Device according to claim or 2 characterized in that the light-transmission path (7) in the lock element (1) is S-shaped.

4. Device according to any of the preceding claims characterized in that the light-transmission path (7) is a channel in the lock element (1) that comprises at least two optically separated channel regions.

5. Device according to any of the preceding claims characterized in that the light-transmission path (7) comprises a light wave guide.

6. Device according to claim 5 characterized in that the light wave guide comprises at least two optically separated light wave guide regions (7a, 7b, 7c).

7. Device according to claim 5 or 6 characterized in that the optically separated light wave guide regions (7a, 7b, 7c) are located in the same light wave guide and are optically separated from each other by light reflecting boundary layers (8a, 8b).

8. Device according to claim 7 characterized in that the boundary layers (8a, 8b) are formed by a metal coating or metal vaporization.

9. Device according to any of the preceding claims characterized in that the light transmission regions (7a, 7b, 7c) transverse (Y) to the direction of motion (Z) of the lock element (1) have dimensions that are at least as big as the largest variations or tolerances of the motion of the lock element transverse (Y) to the direction of motion (Z) of the lock elements (1).

10. Device according to any of the preceding claims characterized in that an alarm signal is generated if the light-transmission path is obstructed.

11. Device according to any of the preceding claims characterized in that the light emitter (5) is a light pulse emitter and in that the light receiver (6) is a light pulse receiver.

12. Device according to claim 11 characterized in that the output signal of the light pulse receiver inhibits the further emission of the light pulse.

13. Device according to claim 12 characterized in that the light pulse emitter is activated with a time-lag with respect to the occurrence of the output signal of the light pulse receiver.

14. Device according to claim 13 characterized in that the time lag period is large compared to the light pulse duration.

15. Device according to any of the preceding claims characterized by a clock signal generator and a following counter that controls the light pulse emitter and that is resettable from the output signal of the light pulse receiver.

16. Device according to claim 15 characterized in that the counter is a clock frequency divider having at least two outputs for different clock frequencies.

17. Device according to claim 15 or 16 characterized in that the wave-length of the light pulse signal is in the infrared portion.

18. Device according to any of claims 15 - 17 characterized by a starting circuit for resetting the counter when a supply voltage is supplied.

19. Device according to any of claims 15 to 18 characterized by an alarm generating circuit generating an alarm signal when no output signal of the light pulse receiver is applied to the reset input of the counter within a predetermined period of time.

20. Device according to any of claims 15 - 19 characterized in that the light pulse duration is small in comparison to a predetermined time period while the counter does not supply an alarm signal.

21. Device according to any of claims 15 - 20 characterized in that the light pulse receiver comprises a capacitor supplying a reset signal to the reset input of the counter after a threshold voltage has been reached.

## Revendications

1. Dispositif pour la surveillance d'un verrou de fermeture (1), appréhendant s'il se trouve à l'état fermé ou ouvert, avec un chemin de transmission de la lumière, présentant à l'une de ses extrémités un photoémetteur (5) et à son autre extrémité un photorécepteur (6), et avec un chemin de transmission de la lumière, guidé dans le verrou de fermeture (1) et qui n'est pas interrompu lorsque le verrou de fermeture est fermé, caractérisé en ce que le chemin de transmission de lumière (7) est disposé dans le verrou de fermeture (1) obliquement par rapport à sa direction de déplacement (4, Z) et est constitué d'au moins deux zones de transmission de lumière (7a, 7b, 7c), disposées les unes à côté des autres par rapport à la direction de déplacement (4, Z) du verrou de fermeture (1) et séparées optiquement les unes des autres.

2. Dispositif selon la revendication 1, caractérisé en ce que le photoémetteur (5) est disposé à l'extérieur de la zone spatiale de réception de la lumière du photorécepteur (6), lorsque le verrou de fermeture (1) est ouvert.

3. Dispositif selon la revendication 1 ou 2, caractérisé en ce que le chemin de transmission de la lumière (7) est en forme de S dans son trajet dans le verrou de fermeture (1).

4. Dispositif selon l'une des revendications précédentes, caractérisé en ce que le chemin de transmission de la lumière (7) est un canal ménagé dans le verrou de fermeture (1), constitué d'au moins deux zones de canal séparées optiquement l'une de l'autre.

5. Dispositif selon l'une des revendications précédentes, caractérisé en ce que le chemin de transmission de la lumière (7) est constitué d'un guide de lumière.

6. Dispositif selon la revendication 5, caractérisé en ce que le guide de lumière est constitué d'au moins deux zones de guide de lumière (7a, 7b, 7c) séparées optiquement les unes des autres.

7. Dispositif selon la revendication 5 ou 6, caractérisé en ce que les zones de guide de lumière (7a, 7b, 7c) séparées optiquement les unes des autres sont disposées dans le même guide de lumière et sont séparées optiquement les unes des autres par des couches limites (8a, 8b) réfléchissant la lumière.

8. Dispositif selon la revendication 7, caractérisé en ce que les couches limites (8a, 8b) sont constituées par un revêtement métallique ou une métallisation sous vide.

9. Dispositif selon l'une des revendications précédentes, caractérisé en ce que les zones de transmission de la lumière (7a, 7b, 7c) présentent, en direction transversale (Y) par rapport à la direction de revêtement (Z) du verrou de fermeture (1) des dimensions au moins égale aux tolérances de déplacement maximales du verrou de fermeture, dans la direction transversale (Y) par rapport à la direction de déplacement (Z) du verrou de fermeture (1).

10. Dispositif selon l'une des revendications précédentes, caractérisé en ce qu'un signal d'alarme est produit lorsque le chemin de transmission de la lumière est interrompu.

11. Dispositif selon l'une des revendications précédentes, caractérisé en ce que le photoémetteur (5) est un émetteur d'impulsions lumineuses et le photorécepteur (6) est un récepteur d'impulsions lumineuses.

12. Dispositif selon la revendication 11, caractérisé en ce que le signal de sortie du récepteur d'impulsions lumineuses fait cesser la continuation de l'émission d'impulsions lumineuses.

13. Dispositif selon la revendication 12, caractérisé en ce que l'émetteur d'impulsion lumineuses est activé avec un retard temporel par rapport à la survenance du signal de sortie de récepteur d'impulsions lumineuses.

14. Dispositif selon la revendication 13, caractérisé en ce que l'intervalle de temps de retardement est grand par rapport à la durée de l'impulsion lumineuse.

15. Dispositif selon l'une des revendications précédentes, caractérisé par un générateur de signal cadencé et par un compteur, mis en circuit en aval, commandant l'émetteur d'impulsions lumineuses et pouvant être remis à l'état initial par le signal de sortie du récepteur d'impulsions lumineuses.

16. Dispositif selon la revendication 15, caractérisé en ce que le compteur est un diviseur de fréquence de cadencement, ayant au moins deux sorties pour des fréquences de cadencement différentes.

17. Dispositif selon la revendication 15 ou 16, caractérisé en ce que la longueur d'ondes du signal d'impulsion lumineuse est dans la plage des infrarouges.

18. Dispositif selon l'une des revendications 15 à 17, caractérisé par un circuit de démarrage, destiné à remettre à l'état initial le compteur lorsqu'est appliquée une tension d'alimentation.

19. Dispositif selon l'une des revendications 15 à 18, caractérisé par un circuit transducteur d'alarme, produisant un signal d'alarme, lorsque, à l'entrée de remise à l'état initial du compteur, aucun signal de sortie ne sort de l'émetteur d'impulsions lumineuses pendant un intervalle de temps prédéterminé.

20. Dispositif selon l'une des revendications 15 à 19, caractérisé en ce que la durée des impulsions lumineuses est petite par rapport à un intervalle de temps prédéterminé, pendant lequel le compteur n'indique aucun signal d'alarme.

21. Dispositif selon l'une des revendications 15 à 20, caractérisé en ce que le récepteur d'impulsions lumineuses présente un condensateur qui produit un signal de remise à l'état initial à l'entrée de remise à l'état initial du compteur, après atteinte d'une tension de seuil.
